# EUROPÄISCHE PATENTSCHRIFT

(11) **EP 3 836 758 B1**
(45) Veröffentlichungstag und Bekanntmachung des Hinweises auf die Patenterteilung: **08.11.2023**
(21) Anmeldenummer: 19215595.0
(22) Anmeldetag: 12.12.2019
(51) Int. Cl.: H05B 45/20, H05B 45/10, H05B 47/115, H05B 47/155

(54) **VERFAHREN ZUR STEUERUNG EINES SANITÄRRAUMBELEUCHTUNGSSYSTEMS UND SANITÄRRAUMBELEUCHTUNGSSYSTEM**
CONTROL METHOD FOR A SANITARY ROOM ILLUMINATION SYSTEM AND SANITARY ROOM ILLUMINATION SYSTEM
PROCÉDÉ DE COMMANDE D'UN SYSTÈME D'ÉCLAIRAGE D'UN SALLE SANITAIRE ET SYSTÈME D'ÉCLAIRAGE D'UN SALLE SANITAIRE

(43) Veröffentlichungstag der Anmeldung: 16.06.2021
(73) Patentinhaber: Geberit International AG, 8645 Jona (CH)
(72) Erfinder: NIETLISPACH, Miriam, 5000 Aarau (CH); SOMMER, Remo, 8037 Zürich (CH); STÄUBLI, Tom, 8004 Zürich (CH)
(74) Vertreter: Frischknecht, Harry Ralph

(56) Entgegenhaltungen:
- EP-A1- 3 065 512
- DE-U1-202009 011 690
- US-A1- 2007 247 089
- US-A1- 2009 289 577
- US-A1- 2013 141 013

## Beschreibung

### TECHNISCHES GEBIET

Die vorliegende Erfindung betrifft ein Verfahren zur Steuerung eines Sanitärraumbeleuchtungssystems nach Anspruch 1, ein Sanitärraumbeleuchtungssystem nach Anspruch 13, eine ein Sanitärraumbeleuchtungssystem und mindestens einen Sanitärartikel umfassende Anordnung nach Anspruch 14 sowie eine Verwendung eines Sanitärraumbeleuchtungssystems nach Anspruch 18.

### STAND DER TECHNIK

Aus dem Stand der Technik sind verschiedenartige Beleuchtungssysteme bekannt. Beispielsweise ist es bekannt, dass Lichtquellen mit einem Dimmer angesteuert werden, wobei der von der Lichtquelle abgegebene Lichtstrom durch die Betätigung des Dimmers beeinflusst wird, so dass die Helligkeit der Lichtquelle mit einer Betätigung des Dimmers zunimmt oder abnimmt.

Eine gute Raumbeleuchtung ist für das Wohlbefinden eines Benutzers wesentlich. Dies betrifft insbesondere Badezimmer, in welchen der Benutzer bzw. die Benutzerin verschiedene Aktivitäten durchführt. Beispielsweise halten sich Benutzer mit Alltagsbeschäftigungen, wie Rasieren oder Schminken in einem Badezimmer auf, wobei dann ein sehr helles Licht zu favorisieren ist. Bei Wellnessaktivitäten ist ein eher gedämpftes Licht gewünscht und in der Nacht ist ein weiter gedämpftes Orientierungslicht vorteilhaft, so dass die Benutzer beim nächtlichen Toilettengang nicht geblendet werden. Gerade bei Badezimmern von durchschnittlicher Grösse und insbesondere auch bei kleinen Badezimmern ist die Beleuchtung enorm wichtig.

Die Druckschriften EP 3 065 512, DE 20 2009 011 690 U1 und die US 2013/141013 offenbaren verschiedene Systeme zur Ansteuerung von Leuchten bzw. Lichtanlagen.

### DARSTELLUNG DER ERFINDUNG

Ausgehend von diesem Stand der Technik liegt der Erfindung eine Aufgabe zugrunde, ein Verfahren für ein Beleuchtungssystem anzugeben, welches verbesserte Eigenschaften aufweist. Insbesondere ist eine besonders bevorzugte Aufgabe, ein Verfahren für ein Beleuchtungssystem anzugeben, mit welchem eine verbesserte Raum-Beleuchtung, insbesondere für kleinere Räume, erreicht werden kann. Eine besonders bevorzugte Aufgabe ist es, ein Verfahren für ein Beleuchtungssystem anzugeben, mit welchem eine verbesserte Raum-Beleuchtung für Sanitärräume, wie Badezimmer, erreicht werden kann.

Diese Aufgabe löst der Gegenstand von Anspruch 1, in welchem ein Verfahren zur Steuerung eines Sanitärraumbeleuchtungssystemsangegeben wird. Das mit dem Verfahren zu steuernde Beleuchtungssystem umfasst eine Steuerung, ein auf die Steuerung wirkendes durch einen Benutzer einstellbares Stellorgan, wobei über das Stellorgan ein benutzerdefinierter Stellwert der Steuerung vorgebbar ist und mehrere Lichtquellen, die durch die Steuerung basierend auf dem durch den Benutzer eingegebenen Stellwert über das Stellorgan ansteuerbar sind. In der Steuerung ist eine vorbestimmte Funktionskurve zwischen Lichtfarbe und Stellwert sowie eine vorbestimmte Funktionskurve zwischen Lichtstrom und Stellwert gespeichert. Die Funktionskurven sind derart definiert, dass bei steigendem Stellwert die Lichtfarbe und der Lichtstrom sich verändern. Bei Betätigung des Stellorgans ist die besagte mindestens eine Lichtquelle basierend auf den vorbestimmten Funktionskurven ansteuerbar, derart, dass bei steigendem Stellwert die Lichtfarbe und der Lichtstrom sich verändern.

Dieses Verfahren hat den Vorteil, dass bei einer Veränderung des Stellwerts nicht nur der Lichtstrom, das heisst die Helligkeit, sondern auch gleichzeitig die Lichtfarbe verändert wird. Durch die vordefinierten Funktionskurven kann für jede gewünschte Beleuchtungssituation eine optimierte Beleuchtung bezüglich Lichtstrom und Helligkeit erreicht werden.

Die optimierte Beleuchtung im Zusammenhang mit einem Sanitärraum weist verschiedene Beleuchtungssituationen auf, welche sich beispielsweise von einer Orientierungsbeleuchtung über eine Stimmungsbeleuchtung und eine Standardbeleuchtung bis hin zu einer Arbeitsbeleuchtung erstrecken. Die Anforderung an die Orientierungsbeleuchtung, die auch als Nachtbeleuchtung bezeichnet werden kann, ist beispielsweise ein tiefer Lichtstrom mit warmen Licht, dies insbesondere unter Vermeidung von Licht mit einem hohen Blauanteil. Hierdurch wird der Benutzer beispielsweise bei nächtlichem Toilettengang nicht geblendet bzw. übermässig aufgeweckt. Eine Arbeitsbeleuchtung wird typischerweise durch einen hohen Lichtstrom, also eine helle Beleuchtung, und durch ein eher kaltes Licht charakterisiert. Die Stimmungsbeleuchtung und die Standardbeleuchtung liegen zwischen der Orientierungsbeleuchtung und der Arbeitsbeleuchtung. Nach der Erfindung wählt der Benutzer aber nicht die einzelnen Beleuchtungssituationen "Orientierungsbeleuchtung", "Stimmungsbeleuchtung", "Standardbeleuchtung" und "Arbeitsbeleuchtung", sondern fährt mit dem Stellorgan die Funktionskurve entsprechend ab, bis er die für sich und seine Zwecke passende Beleuchtung gefunden hat. Die einzelnen Beleuchtungssituationen sind durch Teilbereiche der gesamten Funktionskurve definiert.

Durch das Verfahren kann dem Benutzer weiter ein immer gleiches Lichtverhalten der Beleuchtung bereitgestellt werden, was die Benutzerfreundlichkeit deutlich erhöht.

Weiter kann eine Lichtharmonisierung durch die gleiche Lichtcharakteristik von verschiedenen Lichtquellen in einem Raum erreicht werden.

Weiter ergeht der Vorteil, dass die Einstellung der Beleuchtung für den Benutzer sehr einfach ist, da über das Stellorgan eine gewünschte Benutzereinstellung eingebbar ist, wobei anhand der beiden Funktionskurven die Einstellung der Beleuchtung erfolgt. Eine komplexe Konfiguration bei jeder Beleuchtungseinstellung entfällt somit.

Die Ausdrucksweise "Lichtfarbe" schliesst alle Farben in einem Farbraum, wie beispielsweise in einem CIE 1931-Farbmodell, ein. Andere Modelle oder Definitionen von Farbräumen können aber auch eingesetzt werden.

Vorzugsweise sind Lichtfarben im Weissbereich mit einer bevorzugten Farbtemperatur im Bereich von 1000 Kelvin bis 10000 Kelvin. Besonders bevorzugte Bereiche sind beispielsweise:
- Farbtemperaturbereich von warmweiss mit einer Farbtemperatur von etwa 2000 Kelvin bis "Tageslichtweiss" mit einer Farbtemperatur von etwa 5500 Kelvin, oder
- Farbtemperaturbereich von 2200 Kelvin bis 4000 Kelvin.

Bei tiefem Stellwert ist die Farbtemperatur vorzugsweise warmweiss und der Lichtstrom ist vorzugsweise tief. Bei hohem Stellwert ist die Farbtemperatur vorzugsweise neutral- bis kaltweiss und der Lichtstrom ist höher als bei warmweisser Farbtemperatur.

Unter der Ausdrucksweise "Lichtstrom" wird die Lichtleistung verstanden. Das heisst, die Gesamtmenge der Strahlung, welche von der Lichtquelle in Form von durch das menschliche Auge sichtbare Licht abgebbar ist. Die Masseinheit für den Lichtstrom ist das "Lumen". Der Lichtstrom ist abhängig von der elektrischen Ansteuerung und Leistungsfähigkeit und/oder Effizienz der Lichtquelle und kann durch eine Veränderung des elektrischen Stroms verändert werden.

Wenn mehr als zwei Lichtquellen angeordnet sind, können diese bezüglich des Lichtstroms unterschiedlich angesteuert werden. Das heisst, dass bei gleichem Stellwert der Lichtstrom bei einer Lichtquelle unterschiedlich zum Lichtstrom der anderen Lichtquelle ist. Andere Farben sind auch denkbar. Bei mehreren Lichtquellen ist es zudem denkbar, dass ein Teil der Lichtquellen weisses Licht und ein anderer Teil der Lichtquellen Licht in einer beliebigen Farbe abgeben kann.

Unter der Ausdrucksweise "Lichtquelle" wird ein Element verstanden, über welches Licht abgebbar ist. Eine Lichtquelle umfasst mindestens ein elektrisch ansteuerbares Leuchtelement, wie beispielsweise eine Leuchtdiode. Bei grösseren Lichtquellen sind mehrere Leuchtelemente angeordnet. Die Lichtquelle kann weiter optische Elemente wie Reflektoren und/oder Diffusoren umfassen. Mit anderen Worten umfasst die besonders bevorzugte Lichtquelle mindestens eine durch die Steuerung ansteuerbare Leuchtdiode und optische Elemente, wie ein Reflektor, ein Diffusor, etc.

Unter der Ausdrucksweise "Stellorgan" wird ein durch den Benutzer betätigbares Element verstanden. Beispielsweise kann dies ein bauseitig fest angeordneter Regler, wie ein Drehregler oder ein Drückregler, eine Applikation bzw. ein Programm auf einem Computer, wie einem Smartphone oder einem Tablet, eine Haussteuerung, und/oder ein Bewegungssensor sein. Der Stellwert wird vorzugsweise als Steuersignal an die Steuerung übermittelt und von der Steuerung wird die Lichtquelle dem Stellwert entsprechend angesteuert. Die Übermittlung des Steuersignals an die Steuerung kann drahtgebunden oder drahtlos erfolgen. Mit anderen Worten gesagt: Der Regler stellt ein elektrisches Steuersignal bereit. Die Funktionskurve wird gemäss diesem elektrischen Steuersignal abgefahren und die Lichtquelle wird gemäss der Funktionskurve durch die Steuerung elektrisch angesteuert. Bei der elektrischen Ansteuerung variiert insbesondere der elektrische Strom.

Die Betätigung des Stellorgans, kann je nach Ausbildung desselben durch Drehen, Drücken oder Schieben erfolgen. Die Betätigung kann dabei unter physischer Berührung oder berührungslos erfolgen.

Erfindungsgemäss wird das Verfahren für einen Sanitärraum bzw. ein Badezimmer eingesetzt. Die mindestens eine Lichtquelle ist vorzugsweise für eine oder mehrere Beleuchtungsart(en) ausgewählt aus der Gruppe von
- Deckenlicht;
- Spiegellicht für Arbeitszwecke;
- Arbeitsflächenlicht;
- Bodenlicht; und/oder
- Nischenlicht
vorgesehen. Andere Beleuchtungsarten sind auch denkbar.

Bei einer Änderung des Stellwerts werden sowohl die Funktionskurve zwischen Lichtfarbe und Stellwert als auch die Funktionskurve zwischen Lichtstrom und Stellwert vorzugsweise stufenlos durchfahren bzw. abgefahren. Das heisst, die Beleuchtungsparameter Lichtfarbe und Lichtstrom werden basierend auf dem durch den Benutzer vorgegebenen Stellwert eingestellt und bei einer Veränderung werden die Lichtfarbe und der Lichtstrom basierend auf der Veränderung des Stellwerts verändert, wobei bei der Veränderung die Funktionskurven entsprechend stufenlos abgefahren werden.

Mit anderen Worten kann das Stellorgan stufenlos eingestellt werden. Ebenso erfolgt die Ansteuerung der mindestens einen Lichtquelle stufenlos, derart, dass Veränderungen in Lichtfarbe und Lichtstrom stufenlos erfolgen. Hierdurch ergeht der Vorteil, dass die Beleuchtung in einem Innenraum sehr angenehm und einem Nutzerbedürfnis entsprechend verändert werden kann.

Vorzugsweise ist die Funktionskurve zwischen Lichtstrom und Stellwert derart definiert, dass bei steigendem Stellwert der Lichtstrom im Wesentlichen ansteigt. Im Wesentlichen ansteigt ist so zu verstehen, dass die Funktionskurve zwischen Lichtstrom und Stellwert über den gesamten Stellbereich mit zunehmendem Stellwert mindestens teilweise ansteigt oder bereichsweise flach aber vorzugsweise nicht sinkend verläuft.

Hierdurch wird erreicht, dass bei steigendem Stellwert, das heisst bei zunehmender Betätigung des Stellorgans, die mindestens eine Lichtquelle heller leuchten wird, so dass die Raumbeleuchtung heller wird.

Die eigentliche Zunahme des Lichtstroms bei vergleichbarer Zunahme des Stellwertes kann von einer Lichtquelle im Vergleich zu einer anderen Lichtquelle je nach Beleuchtungsart der Lichtquelle unterschiedlich sein. Beispielsweise ist es denkbar, dass eine Lichtquelle bei gleich zunehmendem Stellwert eine grössere Veränderung im Lichtstrom erfährt als die andere Lichtquelle, wobei beide Lichtquellen bezüglich der Lichtfarbe aber gleich angesteuert werden.

In anderen Ausführungsformen ist es zudem denkbar, dass sich der Lichtstrom bei steigendem Stellwert ansteigend oder absenkend verändert, wobei die Farbe sich zeitgleich ebenfalls verändert.

In einer besonders bevorzugten Ausführungsform ist die Lichtfarbe in einem Bereich von warmweissen Licht mit einer Farbtemperatur von 1000 K bis zu kaltweissen Licht mit einer Farbtemperatur von 10000 K einstellbar, wobei bei steigendem Stellwert die Farbtemperatur und der Lichtstrom ansteigen. In anderen ebenfalls bevorzugten Ausführungsformen sind die Bereiche der Farbtemperatur von 2000 K bis 5500 K oder von 2200 K bis 4000 K. Das heisst mit anderen Worten, dass bei steigendem Lichtstrom die Farbtemperatur vom warmweissen Bereich in den kaltweissen Bereich sich verändert. Bei der besagten kombinierten Veränderung des Lichtstroms und der Lichtfarbe ergeht der Vorteil, dass das Licht bei grösserem Lichtstrom kälter wirkt, was für die Arbeitsbeleuchtung vorteilhaft ist, während es bei tieferem Lichtstrom wärmer wirkt, was für die Orientierungsbeleuchtung vorteilhaft ist.

Vorzugsweise liegt die Funktionskurve der Lichtfarbe in einem Farbraumbereich, der als weiss wahrgenommen wird. Es sind aber auch andere Farben denkbar. Dies insbesondere für die Orientierungsbeleuchtung oder für Statusanzeigen, mit welchen den Benutzern ein Betriebszustand eines Sanitärartikels anzeigbar ist.

Die vorbestimmte Funktionskurve zwischen Lichtfarbe und Stellwert sowie die vorbestimmte Funktionskurve zwischen Lichtstrom und Stellwert für eine Lichtquelle bilden jeweils ein Funktionskurvenpaar, wobei für mindestens zwei Lichtquellen zwei unterschiedliche Funktionskurvenpaare vorgesehen sind, derart, dass jeder Lichtquelle ein passendes Funktionskurvenpaar zugeordnet ist, wobei jedes der unterschiedlichen Funktionskurvenpaare mit dem gleichen Stellwert angesteuert wird.

Durch die Bildung der Funktionskurvenpaare ergeht der Vorteil, dass die Steuerung des Lichtes in einem Raum vereinheitlicht werden kann. Zudem lassen sich vorbestimmte Beleuchtungssituationen, insbesondere stufenlos, durchfahren. Bei einem unteren Stellwert, vorzugsweise im Bereich von ca. 0 bis 25% des maximalen Stellwerts, dient die Beleuchtung im Wesentlichen als Orientierungsbeleuchtung, so dass sich ein Benutzer in der Nacht im Raum orientieren kann. Bei einem zweiten Stellwert, vorzugsweise im Bereich von ca. 25% bis 50%, dient die Beleuchtung im Wesentlichen als Stimmungsbeleuchtung, beispielsweise für Wellnessaktivitäten. Bei einem dritten Stellwert, vorzugsweise im Bereich von ca. 50% bis 75%, dient die Beleuchtung im Wesentlichen als Standardbeleuchtung. Bei einem oberen Stellwert, vorzugsweise im Bereich von ca. 75% bis 100%, dient die Beleuchtung im Wesentlichen als Arbeitsbeleuchtung. Die vier Bereiche lassen sich, wie erwähnt, vorzugsweise stufenlos durchfahren, wobei der Benutzer im entsprechenden Bereich die für ihn passende Beleuchtungskonfiguration wählen kann. Die angegebenen Bereiche sind für jeden der Stellwerte als Beispiele zu verstehen. Die Bereiche können abweichend sein.

Die Funktionskurve zwischen Lichtstrom und Stellwert des einen Funktionskurvenpaars verläuft unterschiedlich oder gleich zur Funktionskurve zwischen Lichtstrom und Stellwert des anderen Funktionskurvenpaars. Der Verlauf der einzelnen Funktionskurven ist im Wesentlichen vom Einsatzzweck der Lichtquellen abhängig.

In einer ersten Variante verläuft die Funktionskurve zwischen Lichtfarbe und Stellwert des einen Funktionskurvenpaars vorzugsweise identisch zur Funktionskurve zwischen Lichtfarbe und Stellwert des anderen Funktionskurvenpaars. In Kombination mit einem unterschiedlichen Verlauf der Funktionskurve zwischen Lichtstrom und Stellwert geben die mindestens zwei Lichtquellen bei gleichem Stellwert die gleiche Lichtfarbe ab, wobei der Lichtstrom zwischen den beiden Lichtquellen unterschiedlich ist. In Kombination mit einem gleichen Verlauf der Funktionskurve zwischen Lichtstrom und Stellwert geben die mindestens zwei Lichtquellen bei gleichem Stellwert die gleiche Lichtfarbe und den gleichen Lichtstrom ab. Hierdurch können verschiedene Anforderungen, die sich an die verschiedenen Beleuchtungssituationen stellen, abgedeckt werden. Beispielsweise kann bei gleicher Lichtfarbe eine für die Benutzerinteraktion vorgesehene Lichtquelle, wie ein Spiegellicht, bei maximalem Stellwert einen grösseren Lichtstrom abgeben, als eine für allgemeine Beleuchtungszwecke vorgesehene Lichtquelle.

In einer Weiterbildung der ersten Variante wird ein weiteres Funktionskurvenpaar zwischen der vorbestimmten Funktionskurve zwischen Lichtfarbe und Stellwert und der vorbestimmten Funktionskurve zwischen Lichtstrom und Stellwert einer weiteren Lichtquelle gebildet. Es ist zu den mindestens zwei Lichtquellen demnach eine zusätzliche Lichtquelle vorhanden. Die Funktionskurve zwischen Lichtfarbe und Stellwert des weiteren Funktionskurvenpaars verläuft unterschiedlich zu den anderen Funktionskurvenpaaren.

Eine besonders bevorzugte Ausführungsform der Weiterbildung der ersten Variante ist, dass die mindestens zwei Lichtquellen mit einer identischen Funktionskurve bezüglich der Farbtemperatur und die weitere Lichtquelle mit einer dazu unterschiedlichen Funktionskurve bezüglich der Farbtemperatur angesteuert wird. Die Funktionskurven bezüglich des Lichtstroms sind vorzugsweise ebenfalls unterschiedlich zueinander. Altnativerweise können mindestens zwei Funktionskurven bezüglich des Lichtstroms auch identisch zueinander sein.

In einer weiteren Variante verläuft die Funktionskurve zwischen Lichtfarbe und Stellwert des einen Funktionskurvenpaars unterschiedlich zur Funktionskurve zwischen Lichtfarbe und Stellwert des anderen Funktionskurvenpaars. In Kombination mit einem unterschiedlichen Verlauf der Funktionskurve zwischen Lichtstrom und Stellwert geben die mindestens zwei Lichtquellen bei gleichem Stellwert eine unterschiedliche Lichtfarbe ab, wobei der Lichtstrom zwischen den beiden Lichtquellen ebenfalls unterschiedlich ist. In Kombination mit einem gleichen Verlauf der Funktionskurve zwischen Lichtstrom und Stellwert geben die mindestens zwei Lichtquellen bei gleichem Stellwert eine unterschiedliche Lichtfarbe, aber den gleichen Lichtstrom ab.

Vorzugsweise verändert sich der Lichtstrom bei einem der Funktionskurvenpaare bzw. bei einer der Lichtquellen bei einer Steigerung des Stellwerts mit einem grösseren Grad als bei einem anderen der Funktionskurvenpaare bzw. bei einer anderen der Lichtquellen bei gleicher Steigerung des Stellwerts.

Mit anderen Worten können Ausführungsformen des Verfahrens wie folgt charakterisiert werden:
- Nach einer Ausbildung ist das Verfahren dadurch charakterisiert, dass die Funktionskurve zwischen Lichtfarbe und Stellwert für mindestens zwei Lichtquellen jeweils identisch verläuft, wobei die Funktionskurven zwischen Lichtstrom und Stellwert für die mindestens zwei Lichtquellen unterschiedlich zueinander verlaufen. Mit anderen Worten gesagt hat das Licht bei einem bestimmten Stellwert die gleiche Farbe, nicht aber den gleichen Lichtstrom.
- Nach einer Ausbildung ist das Verfahren dadurch charakterisiert, dass die Funktionskurve zwischen Lichtfarbe und Stellwert für mindestens zwei Lichtquellen jeweils unterschiedlich verläuft und dass die Funktionskurven zwischen Lichtstrom und Stellwert für die mindestens zwei Lichtquellen unterschiedlich zueinander verlaufen. Mit anderen Worten gesagt hat das Licht der beiden Lichtquellen bei einem bestimmten Stellwert eine unterschiedliche Farbe und einen unterschiedlichen Lichtstrom.
- Nach einer Ausbildung ist das Verfahren dadurch charakterisiert, dass die Funktionskurve zwischen Lichtfarbe und Stellwert für mindestens eine weitere Lichtquelle unterschiedlich zur Funktionskurve zwischen Lichtfarbe und Stellwert der mindestens zwei genannten Lichtquellen verläuft, wobei die Funktionskurven zwischen Lichtstrom und Stellwert für die mindestens drei Lichtquellen unterschiedlich zueinander verlaufen. Hierdurch wird erreicht, dass die Farbe der mindestens einen weiteren Lichtquelle unterschiedlich zur Farbe der ersten und der zweiten Lichtquelle ist.

Vorzugsweise ist die Funktionskurve für die mindestens zwei Lichtquellen eine Funktionskurve im Lichtbereich, der als Weisslicht wahrnehmbar ist. Die Funktionskurve für die weitere Lichtquelle verläuft vorzugsweise ebenfalls im Lichtbereich, der als Weisslicht wahrnehmbar ist. Alternativ kann die Funktionskurve für die weitere Lichtquelle durch andere, nichtweisse Farbbereiche in einem Farbraum verlaufen. Die anderen Farbbereiche sind nicht als weiss wahrnehmbar.

Vorzugsweise ist bezüglich einer sich in der Horizontalen erstreckenden Horizontalebene mindestens eine der Lichtquellen in einen Bereich oberhalb der Horizontalebene gerichtet ist und mindestens eine andere der Lichtquellen ist in einen Bereich unterhalb der Horizontalebene gerichtet, wobei die Lichtfarbe und/oder der Lichtstrom bei der in den Bereich oberhalb der Horizontalebene gerichteten Lichtquelle bei gleich steigendem Stellwert in einem anderen Mass sich verändert, insbesondere zunimmt, als die Lichtfarbe und/oder der Lichtstrom bei der in den Bereich unterhalb der Horizontalebene gerichteten Lichtquelle.

Vorzugsweise liegt die Horizontalebene auf einer Höhe im Bereich 160 bis 220 cm über dem Boden.

Vorzugsweise ist der Bereich des Stellwerts als Bereich zwischen 0% und 100% definiert, wobei bei einem Stellwert von 0% der Lichtstrom gegen 0 strebt, und wobei bei einem Stellwert von 100% der Lichtstrom grösser ist als der Lichtstrom bei einem Stellwert von 0%.

Der maximale Lichtstrom für die mindestens eine Lichtquelle ist von deren Einsatzzweck abhängig. Eine Deckenlichtquelle weist einen grösseren Maximallichtstrom auf als eine Arbeitsflächenlichtquelle oder eine Orientierungslichtquelle. Das heisst, dass bei einem Stellwert von 100% der Lichtstrom der einzelnen Lichtquellen unterschiedlich sein kann. Vorzugsweise ist die Funktionskurve zwischen Lichtfarbe und Stellwert durch den Benutzer bezüglich der Lichtfarbe im Farbraum verschiebbar, wobei die Kurvenform der Funktionskurve unverändert bleibt; oder wobei die Kurvenform der Funktionskurve sich verändert.

Vorzugsweise ist die Funktionskurve zwischen Lichtstrom und Stellwert durch den Benutzer bezüglich des Lichtstroms verschiebbar, wobei die Kurvenform der Funktionskurve unverändert bleibt; oder wobei die Kurvenform der Funktionskurve sich verändert. Hierdurch kann der Benutzer erweiterte Einstellungen vornehmen. Der Benutzer kann die Farbgestaltung des Beleuchtungssystems seinen Bedürfnissen entsprechend anpassen. Vorzugsweise wird bei Einschalten des Beleuchtungssystems die mindestens eine Lichtquelle mit einem vordefinierten Stellwert angesteuert. Alternativerweise wird bei Ausschalten des Beleuchtungssystems durch Betätigen des Schaltorgans der Wert bezüglich Beleuchtungsstärke und Farbtemperatur abgespeichert und bei erneutem Einschalten des Beleuchtungssystems die mindestens eine Lichtquelle mit dem abgespeicherten Werten angesteuert wird.

Ein nach dem Verfahren gemäss der obigen Beschreibung betreibbares Sanitärraumbeleuchtungssystem umfasst
eine Steuerung,
ein auf die Steuerung wirkendes durch einen Benutzer einstellbares Stellorgan, wobei über das Stellorgan gemäss der Benutzereinstellung ein Stellwert der Steuerung vorgebbar ist, und
mindestens eine Lichtquelle, die durch die Steuerung basierend auf dem durch den Benutzer eingegebenen Stellwert über das Stellorgan ansteuerbar ist.

In der Steuerung ist eine vorbestimmte Funktionskurve zwischen Lichtfarbe und Stellwert sowie eine vorbestimmte Funktionskurve zwischen Lichtstrom und Stellwert gespeichert,
wobei die Funktionskurven derart definiert sind, dass bei steigendem Stellwert die Lichtfarbe und der Lichtstrom veränderbar sind, und
wobei bei Betätigung des Stellorgans die besagte mindestens eine Lichtquelle basierend auf den vorbestimmten Funktionskurven ansteuerbar ist, derart, dass bei steigendem Stellwert die Lichtfarbe und der Lichtstrom veränderbar sind.

Eine Anordnung umfasst ein nach dem Verfahren gemäss der obigen Beschreibung betreibbares Sanitärraumbeleuchtungssystem und mindestens einen Sanitärartikel. Das Beleuchtungssystem umfasst eine Steuerung, mindestens ein auf die Steuerung wirkendes durch einen Benutzer einstellbares Stellorgan, wobei über das Stellorgan gemäss der Benutzereinstellung ein Stellwert der Steuerung vorgebbar ist, und mindestens zwei Lichtquellen, die durch die Steuerung basierend auf dem durch den Benutzer eingegebenen Stellwert über das Stellorgan ansteuerbar sind. Mindestens eine der Lichtquellen ist an einem Sanitärartikel angeordnet. Die Verbindung der Lichtquellen erfolgt über die Steuerung, über welche die Lichtquellen angesteuert werden. Durch die Verknüpfung der Lichtquellen über die Steuerung ergeht der Vorteil, dass alle Lichtquellen in einem Sanitärraum gemeinsam ansteuerbar sind. Hierdurch kann eine vorteilhafte Beleuchtungssituation geschaffen werden. Insbesondere können die Lichtquellen mit dem oben beschriebenen Steuerverfahren anhand der Funktionskurven angesteuert werden.

Der Sanitärartikel kann ein Urinal, ein Bidet, eine Toilettenschüssel, ein Spiegelschrank, ein Waschtisch, eine Nische in einer Dusche, eine Duschwand, ein Badetuchhalter, etc. sein.

Wie erwähnt werden erfindungsgemäss das Beleuchtungssystem und die Anordnung entsprechend dem hierin beschriebenen Verfahren betrieben, d.h. dass in der Steuerung je Lichtquelle vorbestimmte Funktionskurven gespeichert sind, wobei eine vorbestimmte Funktionskurve zwischen Lichtfarbe und Stellwert sowie eine vorbestimmte Funktionskurve zwischen Lichtstrom und Stellwert für eine Lichtquelle jeweils ein Funktionskurvenpaar bilden, und wobei für mindestens zwei Lichtquellen unterschiedliche Funktionskurvenpaare vorgesehen sind, derart, dass jeder Lichtquelle ein passendes Funktionskurvenpaar zugeordnet ist, wobei jedes der unterschiedlichen Funktionskurvenpaare mit dem gleichen Stellwert angesteuert wird.

Vorzugsweise sind mindestens eine Lichtquelle und die Steuerung an einem Spiegelschrank angeordnet. Besonders bevorzugt sind optionale weitere Lichtquellen, die mit der Steuerung ansteuerbar im Beleuchtungssystem eingebunden sind.

Die Anordnung mindestens einer Lichtquelle und der Steuerung im Spiegelschrank hat den Vorteil, dass der Spiegelschrank über entsprechenden Einbauraum für die Steuerung verfügt, welcher im Revisionsfall gut zugänglich ist.

Vorzugsweise ist das Stellorgan ein Regler und/oder eine Applikation auf einem Computer, wie einem Smartphone oder einem Tablet, und/oder eine Haussteuerung, und/oder ein Bewegungssensor.

Erfindungsgemäß ist das Beleuchtungssystem für einen Sanitärraum vorgesehen, wobei die Lichtquelle vorzugsweise für eine oder mehrere Beleuchtungsart(en) ausgewählt aus der Gruppe von:
- Deckenlicht;
- Spiegellicht;
- Arbeitsflächenlicht;
- Bodenlicht; und/oder
- Nischenlicht
vorgesehen ist.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine schematische Ansicht eines Beleuchtungssystems nach einer Ausführungsform der vorliegenden Erfindung;
- Fig. 2: eine schematische Diagrammdarstellung mit zwei Funktionskurvenarten, die einem Verfahren zur Steuerung eines Beleuchtungssystems zu Grunde liegen;
- Fig. 3: eine schematische Ansicht eines Farbraums mit einer Farbkurve;
- Fig. 4: eine perspektivische Ansicht eines Sanitärraums mit dem Beleuchtungssystem nach der vorliegenden Erfindung;
- Fig. 5: eine perspektivische Ansicht eines Sanitärraums mit dem Beleuchtungssystem nach der vorliegenden Erfindung;
- Fig. 6a-6d: verschiedene Ansichten von Varianten der Funktionskurven.

### BESCHREIBUNG BEVORZUGTER AUSFÜHRUNGSFORMEN

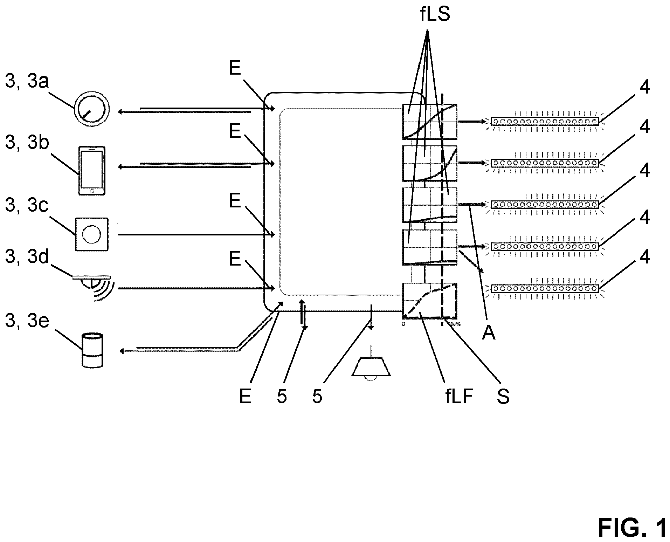

In den Figuren 1 bis 6d werden verschiedene Details eines Verfahrens beziehungsweise einer Vorrichtung zur Steuerung eines Beleuchtungssystems 1 gezeigt. Das Beleuchtungssystem wird insbesondere im Zusammenhang mit einem Badezimmer gezeigt und ist für den Einsatz in einem Badezimmer vorgesehen. Im Vergleich mit anderen Räumen sind Badezimmer vergleichsweise klein ausgebildet, wobei an die Beleuchtung aufgrund verschiedener Aktivtäten im Badezimmer besonderes hohe Anforderungen gestellt werden. Das Beleuchtungssystem 1 und das entsprechende Verfahren ist, wie in der Beschreibung dargelegt, besonders vorteilhaft für den Einsatz in einem Badezimmer, es kann aber auch für alle anderen Innen- und Aussenräume eingesetzt werden.

Das Beleuchtungssystem 1 wird in der Figur 1 schematisch dargestellt. Das Beleuchtungssystem 1 umfasst eine Steuerung 2, mindestens ein auf die Steuerung 2 wirkendes Stellorgan 3 und mindestens eine Lichtquelle 4.

Das Stellorgan 3 kann durch den Benutzer eingestellt werden und stellt für die Steuerung 2 einen Stellwert S bereit. Der Stellwert S repräsentiert dabei die Benutzereinstellung anhand derer die mindestens eine Lichtquelle 4 anzusteuern ist. Das Stellorgan 3 kann, wie in der Figur 1 gezeigt, verschiedenartig ausgebildet sein. Beispielsweise kann das Stellorgan 3 ein Regler 3a, ein Computer 3b, wie ein Smartphone oder ein Tablet, ein Drückregler 3c, ein Bewegungssensor 3d oder eine Anbindung an eine übergeordnete Haussteuerung 3e sein. Die Stellorgane 3a bis 3e stehen drahtgebunden oder drahtlos mit der Steuerung 2 in Verbindung. Über diese Verbindung wird ein dem Stellwert S entsprechendes Steuersignal vom Stellorgan 3 an die Steuerung 2 übermittelt. Anschliessend wird die mindestens eine Lichtquelle 4 von der Steuerung 2 gemäss dem Stellwert S angesteuert.

Weiter umfasst das System, wie erwähnt, mindestens eine Lichtquelle 4. Die Lichtquelle 4 kann verschiedenartig ausgebildet sein. Die Ausdrucksweise "Lichtquelle" richtet sich im Wesentlichen auf alle Arten von Beleuchtungsapparaturen. Eine Lichtquelle umfasst typischerweise eine Leuchtdiode und entsprechende optische Mittel, wie Reflektoren oder Diffusoren. Der Übersichtlichkeit halber wird in der Folge aber ausschliesslich von Lichtquellen gesprochen. Die mindestens eine Lichtquelle 4 wird durch die Steuerung 2 basierend auf dem durch den Benutzer eingegebenen Stellwert S angesteuert. In der gezeigten Ausführungsform sind fünf Lichtquellen 4 gezeigt. Die Zahl der Lichtquellen kann dem Beleuchtungssystem angepasst werden und ist im Wesentlichen von den baulichen Gegebenheiten und den Wünschen der Benutzer abhängig.

Die Steuerung 2 umfasst mindestens ein Speicherelement, in welchem die unten beschriebenen vordefinierten Funktionskurven abgespeichert sind. Weiter umfasst die Steuerung einen Eingang E zum Empfangen des Stellwertes S und einen Ausgang A zur Abgabe eines Steuersignals an die mindestens eine Lichtquelle 4. Darüber hinaus umfasst die Steuerung typischerweise einen Prozessor, welcher mit dem Speicherelement, Eingang E, und Ausgang A in funktionaler Verbindung steht.

Weiter kann die Steuerung 2 optionale zusätzliche Schnittstellen 5 aufweisen, mit welchen weitere Lichtquellen 4 angeschlossen werden können.

In der Steuerung 2 sind im Wesentlichen zwei vorbestimmte Funktionskurven zur Ansteuerung der Lichtquellen 4 gespeichert, nämlich:
- eine Funktionskurve fLF zwischen Lichtfarbe LF und Stellwert S; und
- eine Funktionskurve fLS zwischen Lichtstrom LS und Stellwert S.

Bei Betätigung des Stellorgans 3 wird die mindestens eine Lichtquelle 4 basierend auf den vorbestimmten Funktionskurven fLF, fLS angesteuert. Die Ansteuerung erfolgt dabei derart, dass bei steigendem Stellwert S die Lichtfarbe LF und der Lichtstrom LS sich verändern.

In der Figur 1 werden die Funktionskurve fLF und fLS schematisch für jede Lichtquelle 4 dargestellt. Die Funktionskurve fLF zwischen Lichtfarbe LF und Stellwert S ist für jede Lichtquelle 4 identisch. Die Funktionskurve fLS zwischen Lichtstrom LS und Stellwert S ist für jede Lichtquelle unterschiedlich. Das heisst, dass jede Lichtquelle bei einem bestimmten Stellwert S, der hier durch die gestrichelte Linie dargestellt wird, die gleiche Lichtfarbe und einen unterschiedlichen Lichtstrom abgibt.

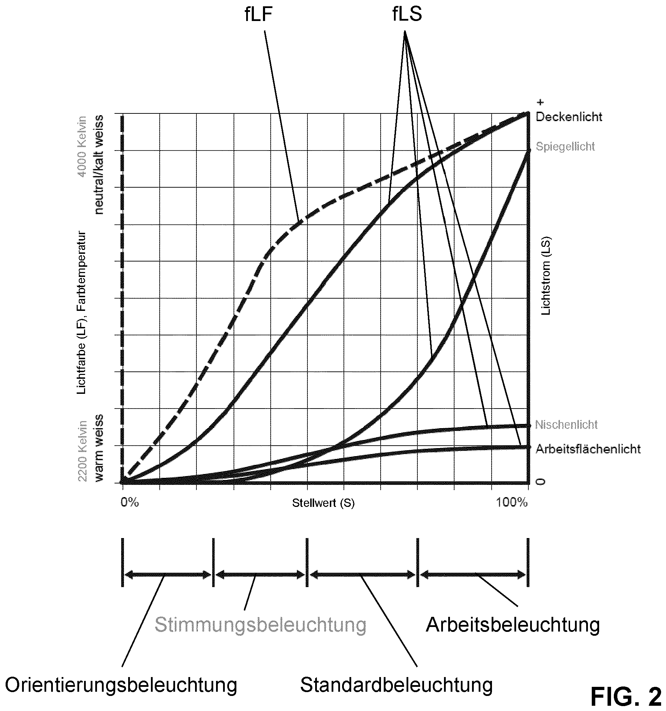

In der Figur 2 wird ein Beispiel von den beiden Funktionskurven gezeigt. Auf der X-Achse ist der Stellwert S im Bereich von 0% bis 100% abgebildet. Auf der Y-Achse links ist die Lichtfarbe, insbesondere die Farbtemperatur, abgebildet. Auf der Y-Achse rechts ist der Lichtstrom abgebildet. Die gestrichelte Linie mit den Bezugszeichen fLF repräsentiert den Funktionskurvenverlauf der Funktionskurve fLF zwischen Lichtfarbe LF und Stellwert S. Die ausgezogenen Linien mit den Bezugszeichen fLS zeigen die Funktionskurven fLS zwischen Lichtstrom LS und Stellwert S für vier verschiedene Lichtquellen 4.

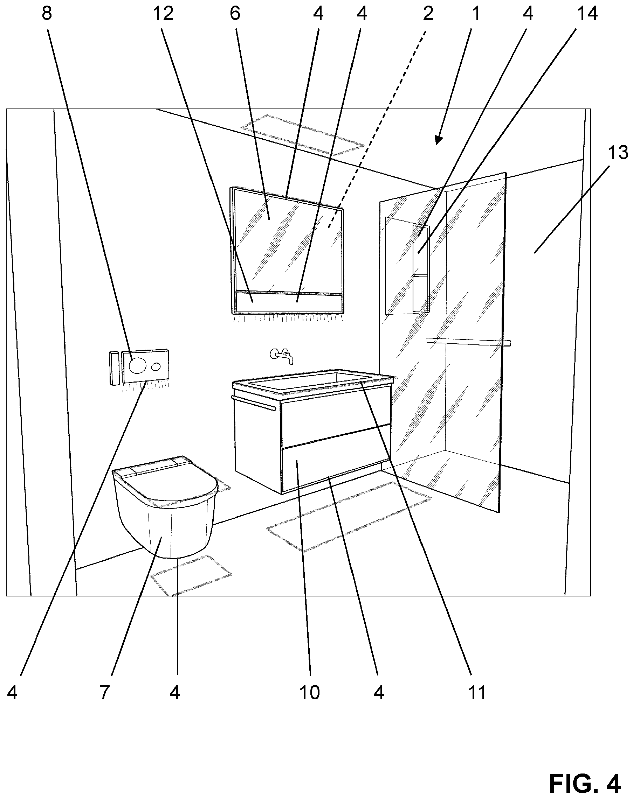

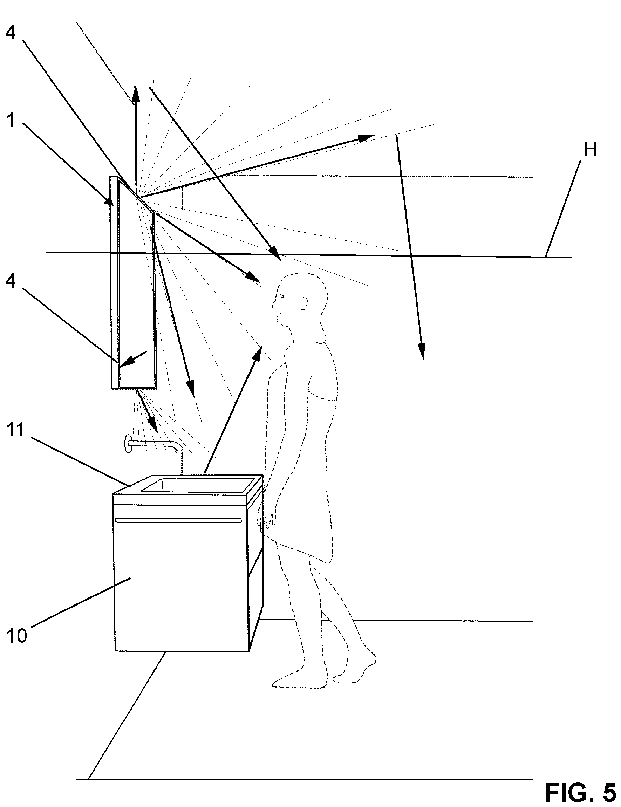

Die Lichtquellen 4 können für verschiedene Beleuchtungsarten vorgesehen sein, was anhand der Figuren 4 und 5 noch im Detail erläutert wird. Typische Beleuchtungsarten sind:
- Deckenlicht;
- Spiegellicht;
- Arbeitsflächenlicht;
- Bodenlicht; und/oder
- Nischenlicht.

Im Diagramm, das in der Figur 2 gezeigt wird, werden die Beleuchtungsarten Deckenlicht, Spiegellicht, Nischenlicht und Arbeitsflächenlicht gezeigt. Das Deckenlicht ist gegen die Raumdecke gerichtet, das Spiegellicht ist auf die vor dem Spiegel stehende Person gerichtet, das Nischenlicht ist auf Nische am Spiegelschrank gerichtet und das Arbeitsflächenlicht ist auf einen Waschtisch vor dem Spiegelschrank gerichtet.

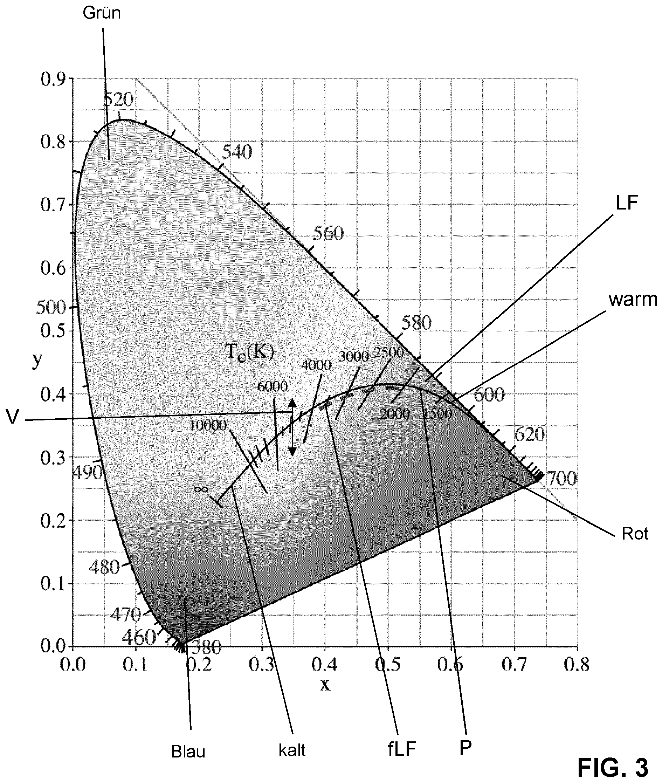

In der gezeigten Ausführungsform ist der Verlauf der Funktionskurve fLF zwischen Lichtfarbe LF und Stellwert S im Wesentlichen für weisses Licht dargestellt. Dabei ist der Bereich von warmweissem Licht im Bereich von 1000 Kelvin bis kaltweissem Licht im Bereich von 8000 Kelvin abgebildet. Andere Farben sind, wie dann anhand der Figur 3 erläutert wird, ebenfalls denkbar.

Bei einem Stellwert von 0% ist das Beleuchtungssystem in Wesentlichem ausgeschaltet oder die Lichtquellen werden mit einem sehr kleinen, minimalen Strom angesteuert, so dass der Lichtstrom ebenfalls minimal ist. Gemäss der vordefinierten Funktionskurve fLS zwischen Lichtstrom LS und Stellwert S, steigt bei zunehmenden Stellwert der Lichtstrom LS für alle Lichtquellen 4 an. Das heisst die Lichtquellen 4 werden derart angesteuert, dass der abgegebene Lichtstrom LS mit zunehmendem Stellwert ansteigt. Die Zunahme des Lichtstroms LS des Deckenlichtes ist dabei am Grössten. Diese verläuft im gezeigten Beispiel im Wesentlichen annähernd linear vom Stellwert 0% bis zum Stellwert 100% und bietet den maximalen Lichtstrom LS. Der Lichtstrom LS des ersten Spiegellichtes steigt im Wesentlichen exponentiell an und erreicht nicht ganz das Niveau des Deckenlichtes bezüglich des Lichtstromes LS. Das Nischenlicht und das Arbeitsflächenlicht verlaufen gedämpfter als das Deckenlicht und das Spiegellicht und erreichen im gezeigten Beispiel im Wesentlichen nicht mehr als 30% des Lichtstromes LS des Deckenlichtes beziehungsweise des Spiegellichtes 1.

Weiter nimmt bei allen vier Lichtquellen bei steigendem Stellwert S auch die Farbtemperatur vom warmweissen Bereich in den kaltweissen Bereich zu. Das heisst, die Farbtemperatur steigt von 1000 Kelvin bis 10000 Kelvin an. Andere Bereiche der Farbtemperatur sind von 2000 Kelvin bis 5500 Kelvin, insbesondere von 2200 Kelvin bis 4000 Kelvin. Dabei wird die Lichtfarbe, hier die Farbtemperatur für alle Lichtquellen mit sich veränderndem Stellwert S gleich verändert. Das heisst, dass bei einem vorgegebenen Stellwert S gemäss dem Beispiel der Figur 2 alle Lichtquellen 4 die gleiche Lichtfarbe, hier die gleiche Farbtemperatur, abgeben.

Die Funktionskurve fLF weist im mittleren Bereich des Stellwertes einen leichten Knick auf. Vor diesem Knick steigt die Farbtemperatur steiler an als nach dem Knick. Dies hat den Vorteil, dass die Beleuchtung entsprechend der gewünschten Beleuchtungssituation angepasst werden kann. Im gezeigten beispielhaften Diagramm werden verschiedene Beleuchtungssituationen dargestellt:
- Orientierungsbeleuchtung
- Stimmungsbeleuchtung
- Standardbeleuchtung
- Arbeitsbeleuchtung.

Die verschiedenen Beleuchtungssituationen können durch den Benutzer durch Betätigung des Stellorgans 3 stufenlos durchfahren werden. Die Abgrenzung zwischen den einzelnen Situationen ist nicht als scharfe Grenze zu verstehen, sondern vielmehr als fliessender Übergang.

Typischerweise wird für eine Orientierungsbeleuchtung und eine Stimmungsbeleuchtung warmes und gedämpftes Licht gefordert, während für eine Standardbeleuchtung oder eine Arbeitsbeleuchtung ein neutrales beziehungsweise kaltweisses Licht vorausgesetzt wird. Die Anforderung an die Orientierungsbeleuchtung ist dabei ein tiefer Lichtstrom mit warmen Licht und vorzugsweise mit tiefem Blauanteil. Hierdurch wird der Benutzer bei nächtlichem Toilettengang nicht geblendet bzw. übermässig aufgeweckt. Eine Arbeitsbeleuchtung erfordert typischerweise einen hohen Lichtstrom und eine neutrale Lichtfarbe bzw. eher kaltes Licht, so dass sich der Benutzer bzw. die Benutzerin im Spiegel für das Rasieren oder Schminken gut erkennen kann. Die Stimmungsbeleuchtung und die Standardbeleuchtung liegen dabei im Bereich zwischen der Orientierungsbeleuchtung und der Arbeitsbeleuchtung.

Wie erwähnt wird in der gezeigten Ausführungsform für alle Lichtquellen die gleiche Funktionskurve fLF zwischen Lichtfarbe LF und Stellwert S vorgegeben. Das heisst, jede der mindestens einen Lichtquellen 4 weist bei einem bestimmten Stellwert die gleiche Lichtfarbe LF auf. In anderen Ausführungsformen wäre es auch möglich, dass eine weitere Funktionskurve fLF abgespeichert ist, derart, dass mindestens eine zusätzliche Lichtquelle mit einer anderen Funktionskurve fLF bezüglich der Lichtfarbe LF angesteuert werden kann. Beispielsweise ist es denkbar, dass eine zusätzliche Funktionskurve fLF für buntfarbenes Licht, wie violettes oder blaues Licht, vorhanden ist. Ein derartiges Licht wäre insbesondere für gestalterische Akzentuierungsaspekte vorteilhaft. Für ein Orientierungslicht könnte die weitere Lichtquelle 4 beispielsweise unterhalb einer Toilettenschüssel oder eines Badmöbels angeordnet und gegen den Boden gerichtet sein. Der Boden würde dann mit andersfarbigem Licht beleuchtet als der Rest des Raums. Der Farbraum für die zusätzliche Funktionskurve fLF wird dann entsprechend auf diese Farben erweitert und die entsprechende Funktionskurve fLF würde dann für diese Farbbereiche durchfahren werden.

Allgemein kann gesagt werden, dass die Funktionskurve fLF zwischen Lichtfarbe und Lichtstrom beliebig in einen Farbraum gelegt werden kann. Beispielsweise können die Farben entlang einer Funktionskurve auch gemischt werden, so dass beispielsweise von einem blauen Licht in ein weisses Licht gefahren werden kann.

Die Funktionskurve fLF zwischen Lichtfarbe LF und Stellwert S sowie die vorbestimmte Funktionskurve fLS zwischen Lichtstrom LS und Stellwert S bilden für eine Lichtquelle jeweils ein Funktionskurvenpaar. Für mindestens zwei Lichtquellen sind dabei unterschiedliche Funktionskurvenpaare vorgesehen, derart, dass jeder Lichtquelle ein passendes Funktionskurvenpaar zugeordnet ist, wobei jedes der unterschiedlichen Funktionskurvenpaare mit dem gleichen Stellwert S angesteuert wird. In der gezeigten Ausführungsform ist dann die Funktionskurve fLF zwischen Lichtfarbe LF und Stellwert S für zwei Funktionspaare jeweils identisch. Die Funktionskurve fLS zwischen Lichtstrom LS und Stellwert S ist dabei für die mindestens zwei Lichtquellen 4 unterschiedlich. In anderen Varianten kann, wie bereits erwähnt, die Funktionskurve fLF zwischen Lichtfarbe LF und Stellwert S zwischen zwei Funktionskurvenpaaren auch unterschiedlich sein.

In der Figur 3 wird ein Beispiel eines möglichen Farbraums gezeigt. Der Farbraum wird durch die Farben rot, blau, grün an den Eckpunkten begrenzt. In der Mitte ist die plancksche Kurve P eingezeichnet. Der Farbbereich der Funktionskurve fLF verläuft entlang eines Teilbereichs der planckschen Kurve P, bei der links der kaltweisse und rechts der warmweisse Bereich verortet sind. Während der Betätigung des Stellorgans wird die Funktionskurve fLF, und damit der definierte Farbbereich, durchfahren. Ein beispielhafter Farbbereich ist durch die gestrichelte Linie fLF dargestellt.

Weiter ist es denkbar, dass die Funktionskurve der Lichtfarbe fLF im Farbraum verschoben wird. Dies wird durch den Pfeil V entsprechend angegeben. Die Funktionskurve der Lichtfarbe fLF kann dabei in Nachbarbereichen des Weisslichtes verschoben werden oder sie kann auch insgesamt im Farbraum verschoben werden. Dies sind für den Benutzer weitere Einstellungsoptionen.

In der Figur 4 wird ein Badezimmer gezeigt, welcher mit einem Beleuchtungssystem 1 gemäss obiger Beschreibung ausgebildet ist. Vorzugsweise ist die Steuerung 2 und mindestens eine der Lichtquellen 4 an einem Spiegel 6, insbesondere an einem Spiegelschrank 6, angeordnet. Diese Anordnung an einen Spiegel oder einem Spiegelschrank hat den Vorteil, dass der Spiegel bzw. der Spiegelschrank als zentrales Element eines Badezimmers praktisch immer vorhanden ist.

Weitere Lichtquellen 4 sind ebenfalls im Beleuchtungssystem 1 eingebunden. In der gezeigten Ausführungsform sind dabei verschiedene Lichtquellen für verschiedene Beleuchtungsarten angeordnet. Einerseits sind Lichtquellen 4 für die Orientierungsbeleuchtung angeordnet. Hier unterhalb einer Toilettenschüssel 7 sowie unterhalb einer Betätigungsplatte 8 für die Betätigung der Toilette. Weiter ist am Unterschrank 10 unterhalb des Waschtisches 11 eine weitere Lichtquelle 4 für die Orientierungsbeleuchtung angeordnet. Eine Lichtquelle 4 als Arbeitsbeleuchtung beleuchtet vom Spiegel weg eine vor dem Spiegel stehende Person. Ein weitere Lichtquelle 4 am Spiegel 6 beleuchtet eine Nische 12 im Spiegelschrank. Eine für die Deckenbeleuchtung vorgesehene Lichtquelle richtet sich vom Spiegel 6 her gegen die Decke. In der Dusche 13 ist eine Nische 14 angeordnet, welche eine als Nischenlicht ausgebildeten Lichtquelle aufweist.

Das Zusammenwirken möglichst vieler Lichtquellen bei sehr geringem Lichtstrom verbessert die Qualität/Nutzbarkeit des Orientierungslichts.

Bezüglich einer sich in der Horizontalen ersteckenden Horizontalebene H ist mindestens eine der Lichtquellen 4 in einen Bereich oberhalb der Horizontalebene H gerichtet und mindestens eine andere Lichtquelle ist in einen Bereich unterhalb der Horizontalebene H gerichtet. Der Lichtstrom LS bei der in dem Bereich oberhalb der Horizontalebene H gerichteten Lichtquelle verändert sich bei gleich steigendem Stellwert S in einem anderen Mass, insbesondere in einem zunehmenden oder abnehmenden Mass, als der Lichtstrom LS bei der in den Bereich unterhalb der Horizontalebene H gerichteten Lichtquelle 4. Hierdurch kann erreicht werden, dass über das Deckenlicht konstant eine gleichmässige Raumausleuchtung geschaffen werden kann. Bei einer Standard- beziehungsweise Arbeitsbeleuchtung arbeitet das Spiegellicht unterhalb der Horizontalebene H mit hohem Lichtstrom und Beleuchtet den Nutzer und seinen Arbeitsplatz, während im Bereich der Orientierungsbeleuchtung beziehungsweise Stimmungsbeleuchtung das Spiegellicht in den Hintergrund tritt und eher die nach unten gerichteten Lichtquellen in den Vordergrund treten.

In der Figur 5 wird eine Seitenansicht gezeigt, welche die Abstrahlrichtung bezüglich der Horizontalebene H noch verdeutlicht. Für die Abstrahlrichtungen sind hier Pfeile eingezeichnet.

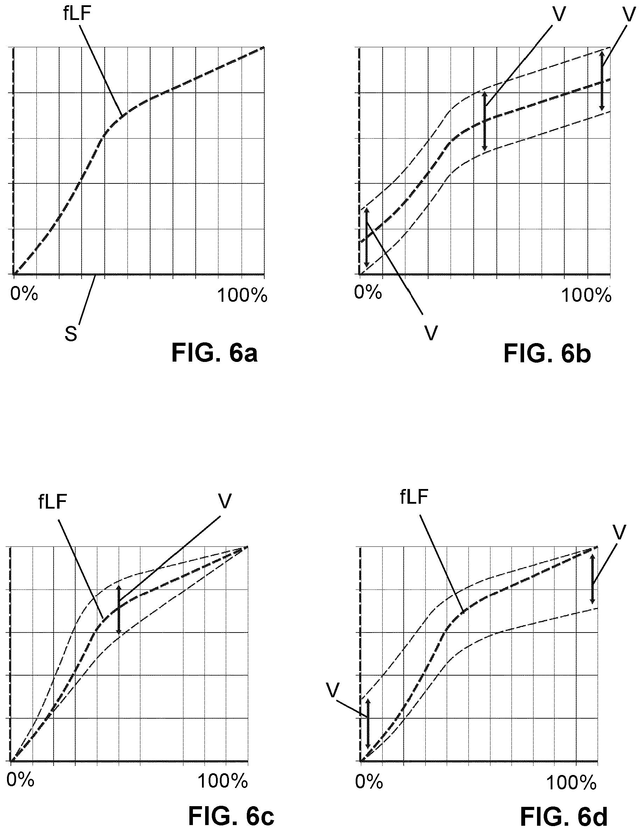

In den Figuren 6a bis 6d werden verschiedene Veränderungsmöglichkeiten der Funktionskurve fLF zwischen Lichtfarbe LF und Stellwert S anhand von weissem Licht gezeigt. Die Figur 6a zeigt den vordefinierten Funktionskurvenverlauf der Funktionskurve fLF. Die Figur 6b zeigt eine parallele Verschiebung der Funktionskurve fLF in Richtung der Verschiebungsrichtung V. Dabei wird die Funktionskurve fLF im Wesentlichen parallel verschoben. In der Figur 6c wird eine Verschiebung der Funktionskurve fLF im mittleren Bereich zwischen den beiden Endpunkten gezeigt, während in der Figur 6e eine Verschiebung der Funktionskurve fLF im Bereich der beiden Endpunkte darstellt.

**BEZUGSZEICHENLISTE**

| | | | |
|---|---|---|---|
| 1 | Beleuchtungssystem | 14 | Nische |
| 2 | Steuerung | | |
| 3 | Stellorgan | A | Ausgang |
| 3a | Regler | E | Eingang |
| 3b | Computer | | |
| 3c | Drückregler | H | Horizontalebene |
| 3d | Präsenzmelder/Sensor | LF | Lichtfarbe |
| 3e | Haussteuerung | LS | Lichtstrom |
| 4 | Lichtquelle | S | Stellwert |
| 5 | Schnittstellen | P | Planksche Kurve |
| 6 | Spiegelschrank | fLF | Funktionskurve Lichtfarbe |
| 7 | Toilette | fLS | Funktionskurve Lichtstrom |
| 8 | Betätigungsplatte | | |
| 10 | Unterschrank | V | Pfeil der Verschiebungsrichtung |
| 11 | Waschtisch | | |
| 12 | Nische | | |
| 13 | Dusche | | |

## Patentansprüche

1. Verfahren zur Steuerung eines Sanitärraumbeleuchtungssystems (1) umfassend
eine Steuerung (2),
mindestens ein auf die Steuerung (2) wirkendes durch einen Benutzer einstellbares Stellorgan (3), wobei über das Stellorgan (3) ein benutzerdefinierter Stellwert (S) der Steuerung vorgebbar ist, und
mehrere Lichtquellen (4), die durch die Steuerung (2) basierend auf dem durch den Benutzer eingegebenen Stellwert (S) über das Stellorgan (3) ansteuerbar sind,
**dadurch gekennzeichnet, dass**
in der Steuerung (2) je Lichtquelle eine vorbestimmte Funktionskurve (fLF) zwischen Lichtfarbe (LF) und Stellwert (S) sowie eine vorbestimmte Funktionskurve (fLS) zwischen Lichtstrom (LS) und Stellwert (S) gespeichert sind, wobei die vorbestimmte Funktionskurve (fLF) zwischen Lichtfarbe (LF) und Stellwert (S) sowie die vorbestimmte Funktionskurve (fLS) zwischen Lichtstrom (LS) und Stellwert (S) für eine Lichtquelle (4) jeweils ein Funktionskurvenpaar bilden,
wobei die Funktionskurven (fLF, fLS) derart definiert sind, dass bei steigendem Stellwert (S) die Lichtfarbe (LF) und der Lichtstrom (LS) sich verändern,
wobei bei Betätigung des Stellorgans (3) die besagte mindestens eine Lichtquelle (4) basierend auf den vorbestimmten Funktionskurven (fLF, fLS) angesteuert wird, derart, dass bei steigendem Stellwert (S) die Lichtfarbe (LF) und der Lichtstrom (LS) sich verändern, und
wobei für mindestens zwei Lichtquellen (4) zwei unterschiedliche Funktionskurvenpaare vorgesehen sind, derart, dass jeder Lichtquelle (4) ein passendes Funktionskurvenpaar zugeordnet ist, wobei jedes der unterschiedlichen Funktionskurvenpaare mit dem gleichen Stellwert (S) angesteuert wird.

2. Verfahren nach Anspruch 1, **dadurch gekennzeichnet, dass** bei einer Veränderung des Stellwertes die vorbestimmten Funktionskurven (fLF, fLS) stufenlos durchfahren bzw. abgefahren werden.

3. Verfahren nach Anspruch 1 oder 2, **dadurch gekennzeichnet, dass** die Funktionskurve (fLS) zwischen Lichtstrom (LS) und Stellwert (S) derart definiert ist, dass bei steigendem Stellwert (S) der Lichtstrom (LS) im Wesentlichen ansteigt.

4. Verfahren nach einem der vorhergehenden Ansprüche, **dadurch gekennzeichnet, dass** die Farbtemperatur der Lichtfarbe (LF) in einem Bereich von 1000 K bis 10000 K, insbesondere von 2000 K bis 5500 K, vorzugsweise von 2200 K bis 4000 K, einstellbar ist, wobei bei steigendem Stellwert (S) die Farbtemperatur und der Lichtstrom (LS) ansteigen.

5. Verfahren nach einem der vorhergehenden Ansprüche, **dadurch gekennzeichnet, dass** die Funktionskurve (fLS) zwischen Lichtstrom (LS) und Stellwert (S) des einen Funktionskurvenpaars unterschiedlich oder gleich zur Funktionskurve (fLS) zwischen Lichtstrom (LS) und Stellwert (S) des anderen Funktionskurvenpaars verläuft.

6. Verfahren einem der vorhergehenden Ansprüche, **dadurch gekennzeichnet, dass** die Funktionskurve (fLF) zwischen Lichtfarbe (LF) und Stellwert (S) des einen Funktionskurvenpaars identisch zur Funktionskurve (fLF) zwischen Lichtfarbe (LF) und Stellwert (S) des anderen Funktionskurvenpaars verläuft.

7. Verfahren nach Anspruch 6, **dadurch gekennzeichnet, dass** ein weiteres Funktionskurvenpaar zwischen der vorbestimmten Funktionskurve (fLF) zwischen Lichtfarbe (LF) und Stellwert (S) sowie der vorbestimmten Funktionskurve (fLS) zwischen Lichtstrom (LS) und Stellwert (S) einer weiteren Lichtquelle gebildet wird, wobei die Funktionskurve (fLF) zwischen Lichtfarbe (LF) und Stellwert (S) des weiteren Funktionskurvenpaars unterschiedlich zu den anderen Funktionskurvenpaaren verläuft.

8. Verfahren nach einem der vorhergehenden Ansprüche 1 bis 6, **dadurch gekennzeichnet, dass** die Funktionskurve (fLF) zwischen Lichtfarbe (LF) und Stellwert (S) des einen Funktionskurvenpaars unterschiedlich zur Funktionskurve (fLF) zwischen Lichtfarbe (LF) und Stellwert (S) des anderen Funktionskurvenpaars verläuft.

9. Verfahren nach einem der vorhergehenden Ansprüche, **dadurch gekennzeichnet, dass** der Lichtstrom bei einem der Funktionskurvenpaare bzw. bei einer der Lichtquellen bei einer Steigerung des Stellwerts mit einem grösseren Grad sich verändert als bei einem anderen der Funktionskurvenpaare bzw. bei einer anderen der Lichtquellen bei gleicher Steigerung des Stellwerts.

10. Verfahren nach einem der vorhergehenden Ansprüche, **dadurch gekennzeichnet, dass** bezüglich einer sich in der Horizontalen erstreckenden Horizontalebene (H) mindestens eine der Lichtquellen (4) in einen Bereich oberhalb der Horizontalebene (H) gerichtet ist und dass mindestens eine andere der Lichtquellen (4) in einen Bereich unterhalb der Horizontalebene (H) gerichtet ist, wobei die Lichtfarbe (LF) und/oder der Lichtstrom (LS) bei der in den Bereich oberhalb der Horizontalebene (H) gerichteten Lichtquelle bei gleich steigendem Stellwert in einem anderen Mass sich verändert, insbesondere zunimmt, als die Lichtfarbe (LF) und/oder der Lichtstrom (LS) bei der in den Bereich unterhalb der Horizontalebene (H) gerichteten Lichtquelle (4).

11. Verfahren nach einem der vorhergehenden Ansprüche, **dadurch gekennzeichnet, dass** der Bereich des Stellwerts als Bereich zwischen 0% und 100% definiert ist, wobei bei einem Stellwert von 0% der Lichtstrom gegen 0 strebt, und wobei bei einem Stellwert von 100% der Lichtstrom grösser ist als der Lichtstrom bei einem Stellwert von 0%.

12. Verfahren nach einem der vorhergehenden Ansprüche, **dadurch gekennzeichnet,**
**dass** die Funktionskurve (fLF) zwischen Lichtfarbe (LF) und Stellwert (S) durch den Benutzer bezüglich der Lichtfarbe in einem Farbraum verschiebbar ist, wobei die Kurvenform der Funktionskurve (fLF) unverändert bleibt; oder wobei die Kurvenform der Funktionskurve (fLF) sich verändert;
oder
**dass** die Funktionskurve (fLS) zwischen Lichtstrom (LS) und Stellwert (S) durch den Benutzer bezüglich des Lichtstroms verschiebbar ist, wobei die Kurvenform der Funktionskurve (fLS) unverändert bleibt; oder wobei die Kurvenform der Funktionskurve (fLS) sich verändert.

13. Sanitärraumbeleuchtungssystem, welches nach dem Verfahren gemäss einem der vorhergehenden Ansprüche
1-12 betreibbar ist, umfassend eine Steuerung (2),
mindestens ein auf die Steuerung (2) wirkendes durch einen Benutzer einstellbares Stellorgan (3), wobei über das Stellorgan (3) gemäss einer Benutzereinstellung ein Stellwert (S) der Steuerung (2) vorgebbar ist, und
mehrere Lichtquellen (4), die durch die Steuerung (2) basierend auf dem durch den Benutzer eingegebenen Stellwert (S) über das Stellorgan (3) ansteuerbar sind,
wobei in der Steuerung (2) je Lichtquelle eine vorbestimmte Funktionskurve (fLF) zwischen Lichtfarbe (LF) und Stellwert (S) sowie eine vorbestimmte Funktionskurve (fLS) zwischen Lichtstrom (LS) und Stellwert (S) gespeichert ist, wobei die vorbestimmte Funktionskurve (fLF) zwischen Lichtfarbe (LF) und Stellwert (S) sowie die vorbestimmte Funktionskurve (fLS) zwischen Lichtstrom (LS) und Stellwert (S) für eine Lichtquelle (4) jeweils ein Funktionskurvenpaar bilden,
wobei die Funktionskurven (fLF, fLS) derart definiert sind, dass bei steigendem Stellwert (S) die Lichtfarbe (LF) und der Lichtstrom (LS) veränderbar sind,
wobei die Steuerung dazu eingerichtet ist, bei Betätigung des Stellorgans (3) die besagte mindestens eine Lichtquelle (4) basierend auf den vorbestimmten Funktionskurven (fLF, fLS) anzusteuern, derart, dass bei steigendem Stellwert (S) die Lichtfarbe (LF) und der Lichtstrom (LS) veränderbar sind,
und
wobei für mindestens zwei Lichtquellen (4) zwei unterschiedliche Funktionskurvenpaare vorgesehen sind, derart, dass jeder Lichtquelle (4) ein passendes Funktionskurvenpaar zugeordnet ist, wobei jedes der unterschiedlichen Funktionskurvenpaare mit dem gleichen Stellwert (S) ansteuerbar ist.

14. Anordnung, welche nach dem Verfahren gemäss einem der vorhergehenden Ansprüche betreibbar ist, umfassend ein Sanitärraumbeleuchtungssystem gemäss Anpruch 13 und mindestens einen Sanitärartikel, wobei mindestens eine der Lichtquellen (4) am mindestens einen Sanitärartikel angeordnet ist.

15. Sanitärraumbeleuchtungssystem bzw. Anordnung nach Anspruch 13 oder 14, **dadurch gekennzeichnet, dass** mindestens eine der Lichtquellen (4) und die Steuerung (2) an einem Spiegelschrank (6) angeordnet sind und dass optionale weitere Lichtquellen (4), die mit der Steuerung ansteuerbar sind, im Beleuchtungssystem eingebunden sind.

16. Sanitärraumbeleuchtungssystem bzw. Anordnung nach einem der Ansprüche 13 bis 15, **dadurch gekennzeichnet, dass** das Stellorgan ein Regler und/oder eine Applikation auf einem Computer, insbesondere einem Smartphone oder einem Tablet, und/oder eine Haussteuerung, ist.

17. Sanitärraumbeleuchtungssystem bzw. Anordnung nach einem der Ansprüche 13 bis 16, **dadurch gekennzeichnet, dass** das Beleuchtungssystem für einen Innenraum vorgesehen ist, wobei die Lichtquelle für eine oder mehrere Beleuchtungsart(en) ausgewählt aus der Gruppe von:
- Deckenlicht;
- Spiegellicht;
- Arbeitsflächenlicht;
- Bodenlicht; und/oder
- Nischenlicht.

18. Verwendung eines Sanitärraumbeleuchtungssystems bzw. einer Anordnung nach einem der vorhergehenden Ansprüche 13 bis 17, **dadurch gekennzeichnet, dass** das Sanitärraumbeleuchtungssystem für einen Sanitärraum, insbesondere ein Badezimmer, eingesetzt wird.

## Claims

1. method for controlling a sanitary room lighting system (1) comprising
a controller (2),
at least one actuator (3) acting on the controller (2) and being adjustable by a user, wherein a user-defined control value (S) of the controller can be preset, and
several light sources (4) which can be controlled by the controller (2) based on the control value (S) entered by the user via the actuator (3),
**characterized in that**
in the controller (2) a predetermined function curve (fLF) between light color (LF) and control value (S) as well as a predetermined function curve (fLS) between luminous flux (LS) and control value (S) are stored for each light source, wherein the predetermined function curve (fLF) between light color (LF) and control value (S) and the predetermined function curve (fLS) between luminous flux (LS) and control value (S) each form a pair of function curves for a light source (4),
wherein the function curves (fLF, fLS) are defined in such a way that with increasing control value (S), the light color (LF) and the luminous flux (LS) change, wherein, when the actuator (3) is actuated, said at least one light source (4) is controlled based on the predetermined function curves (fLF, fLS) such that, as the control value (S) increases, the light color (LF) and the luminous flux (LS) change, and
wherein for at least two light sources (4), two different pairs of function curves are provided in such a way that each light source (4) is assigned a suitable pair of function curves, wherein each of the different pairs of function curves is controlled with the same control value (S).

2. Method according to claim 1, **characterized in that**, in the case of a change of the control value, the predetermined function curves (fLF, fLS) can be steplessly traversed or traced.

3. Method according to claim 1 or 2, **characterized in that** the function curve (fLS) between luminous flux (LS) and control value (S) is defined such that the luminous flux (LS) essentially increases as the control value (S) increases.

4. Method according to any of the preceding claims, **characterized in that** the color temperature of the light color (LF) can be adjusted in a range from 1000 K to 10000 K, in particular from 2000 K to 5500 K, preferably from 2200 K to 4000 K, wherein the color temperature and the luminous flux (LS) increase as the control value (S) increases.

5. Method according to one of the preceding claims, **characterized in that** the function curve (fLS) between luminous flux (LS) and control value (S) of the one pair of function curves differs from or is the same as the function curve (fLS) between luminous flux (LS) and control value (S) of the other pair of function curves.

6. Method according to any one of the preceding claims, **characterized in that** the function curve (fLF) between light color (LF) and control value (S) of the one function curve pair is identical to the function curve (fLF) between light color (LF) and control value (S) of the other function curve pair.

7. Method according to claim 6, **characterized in that** a further pair of function curves between the predetermined function curve (fLF) between light color (LF) and control value (S) and the predetermined function curve (fLS) between luminous flux (LS) and control value (S) is formed of a further light source, wherein the function curve (fLF) between light color (LF) and control value (S) of the further function curve pair is different from the other function curve pairs.

8. Method according to any of the preceding claims 1 to 6, **characterized in that** the function curve (fLF) between light color (LF) and control value (S) of the one function curve pair is different from the function curve (fLF) between light color (LF) and control value (S) of the other function curve pair.

9. Method according to one of the preceding claims, **characterized in that** the luminous flux in one of the pairs of function curves or in one of the light sources, respectively, changes to a greater degree with an increase of the control value than in another of the pairs of function curves or in another of the light sources, respectively, with the same increase in the control value.

10. Method according to one of the preceding claims, **characterized in that** with respect to a horizontal plane (H) extending in the horizontal, at least one of the light sources (4) is directed into a region above the horizontal plane (H) and that at least one other of the light sources (4) is directed into a region below the horizontal plane (H), wherein the light color (LF) and/or the luminous flux (LS) at the light source directed into the region above the horizontal plane (H) changes, in particular increases, to a different extent than the light color (LF) and/or the luminous flux (LS) at the light source (4) directed into the region below the horizontal plane (H), when the control value increases at the same rate.

11. Method according to any one of the preceding claims, **characterized in that** the range of the control value is defined as a range between 0% and 100%, wherein at a control value of 0% the luminous flux tends towards 0, and wherein at a control value of 100% the luminous flux is greater than the luminous flux at a control value of 0%.

12. Method according to one of the preceding claims, **characterized in that** in that the function curve (fLF) between light color (LF) and control value (S) can be shifted by the user with respect to the light color in a color space, wherein the curve shape of the function curve (fLF) remains unchanged; or where the curve shape of the function curve (fLF) changes; or
that the function curve (fLS) between luminous flux (LS) and control value (S) is shiftable by the user with respect to the luminous flux, wherein the curve shape of the of the function curve (fLS) remains unchanged; or wherein the curve shape of the function curve (fLS) changes.

13. Sanitary room lighting system, operable according to the method according to any one of the preceding claims 1-12, comprising
a controller (2),
at least one actuator (3) acting on the controller (2) and being adjustable by a user, wherein a control value (S) of the controller (2) can be preset via the actuator according to a user setting, and
multiple light sources (4), which are controllable by the controller (2) via the actuator (3) based on the control value (S) entered by the user,
wherein in the controller (2) for each light source a predetermined function curve (fLF) between light color (LF) and control value (S) as well as a predetermined function curve (fLS) between luminous flux (LS) and control value (S) is stored, wherein the predetermined function curve (fLF) between light color (LF) and control value ( S) as well as the predetermined function curve (fLS) between luminous flux ( LS) and control value (S) each form a pair of function curves for a light source (4), wherein the function curves (fLF, fLS) are defined in such a way that the light color (LF) and the luminous flux (LS) can be changed as the control value (S) increases, wherein the controller is adapted to control said at least one light source (4) based on the predetermined function curves (fLF, fLS) upon actuation of the actuator (3), such that
the light color (LF) and the luminous flux (LS) can be changed as the control value (S) increases,
and
wherein for at least two light sources (4) two different function curve pairs are provided such that each light source (4) is assigned a matching pair of function curves, wherein each of the different pairs of function curves is controllable with the same control value (S).

14. Arrangement, operable according to the method according to one of the preceding claims, comprising a sanitary room lighting system according to claim 13 and at least one sanitary article, wherein at least one of the light sources (4) is arranged at at least one sanitary article.

15. Sanitary room lighting system or arrangement, respectively, according to claim 13 or 14, **characterized in that** at least one of the light sources (4) and the controller (2) are arranged on a mirror cabinet (6), and that optional further light sources (4), which are controllable with the controller, are integrated in the lighting system.

16. Sanitary room lighting system or arrangement, respectively, according to any one of claims 13 to 15, **characterized in that** the actuator is a regulator and/or an application on a computer, in particular a smartphone or a tablet, and/or a house control system.

17. Sanitary room lighting system arrangement, respectively, according to one of claims 13 to 16, **characterized in that** the lighting system is provided for an interior space, wherein the light source is for one or more type(s) of lighting selected from the group of:
- ceiling light;
- mirror light;
- work surface light;
- floor light; and/or
- niche light.

18. Use of a sanitary room lighting system or an arrangement according to any one of the preceding claims 13 to 17, **characterized in that** the sanitary room lighting system is used for a sanitary room, especially a bathroom.

## Revendications

1. Procédé de commande d'un système d'éclairage de local sanitaire (1) comprenant
une commande (2),
au moins un organe de réglage (3) agissant sur la commande (2) et réglable par un utilisateur, une valeur de réglage (S) de la commande définie par l'utilisateur pouvant être prédéfinie par l'intermédiaire de l'organe de réglage (3), et
plusieurs sources lumineuses (4) qui peuvent être commandées par la commande (2) sur la base de la valeur de réglage (S) entrée par l'utilisateur via l'organe de réglage (3),
**caractérisé en ce**
**qu'**une courbe fonctionnelle prédéterminée (fLF) entre la couleur de la lumière (LF) et la valeur de réglage (S) ainsi qu'une courbe fonctionnelle prédéterminée (fLS) entre le flux lumineux (LS) et la valeur de réglage (S) sont mémorisées dans la commande (2) pour chaque source lumineuse, la courbe fonctionnelle prédéterminée (fLF) entre la couleur de la lumière (LF) et la valeur de réglage (S) ainsi que la courbe fonctionnelle prédéterminée (fLS) entre le flux lumineux (LS) et la valeur de réglage (S) formant respectivement une paire de courbes fonctionnelles pour une source lumineuse (4),
les courbes fonctionnelles (fLF, fLS) étant définies de telle sorte que, lorsque la valeur de réglage (S) augmente, la couleur de la lumière (LF) et le flux lumineux (LS) se modifient,
dans lequel, lors de l'actionnement de l'organe de réglage (3), ladite au moins une source lumineuse (4) est commandée sur la base des courbes fonctionnelles prédéterminées (fLF, fLS) de telle sorte que, lorsque la valeur de réglage (S) augmente, la couleur de la lumière (LF) et le flux lumineux (LS) se modifient, et
deux paires de courbes fonctionnelles différentes étant prévues pour au moins deux sources lumineuses (4), de telle sorte qu'une paire de courbes fonctionnelles adaptée est associée à chaque source lumineuse (4), chacune des paires de courbes fonctionnelles différentes étant commandée avec la même valeur de réglage (S).

2. Procédé selon la revendication 1, **caractérisé en ce que**, lors d'une modification de la valeur de réglage, les courbes fonctionnelles prédéterminées (fLF, fLS) sont tracées ou parcourues en continu.

3. Procédé selon la revendication 1 ou 2, **caractérisé en ce que** la courbe fonctionnelle (fLS) entre le flux lumineux (LS) et la valeur de réglage (S) est définie de telle sorte que lorsque la valeur de réglage (S) augmente, le flux lumineux (LS) augmente essentiellement.

4. Procédé selon l'une des revendications précédentes, **caractérisé en ce que** la température de couleur de la couleur de la lumière (LF) est réglable dans une plage de 1000 K à 10000 K, notamment de 2000 K à 5500 K, de préférence de 2200 K à 4000 K, la température de couleur et le flux lumineux (LS) augmentant lorsque la valeur de réglage (S) augmente.

5. Procédé selon l'une des revendications précédentes, **caractérisé en ce que** la courbe fonctionnelle (fLS) entre le flux lumineux (LS) et la valeur de réglage (S) de l'une des paires de courbes fonctionnelles est différente ou égale à la courbe fonctionnelle (fLS) entre le flux lumineux (LS) et la valeur de réglage (S) de l'autre paire de courbes fonctionnelles.

6. Procédé selon l'une des revendications précédentes, **caractérisé en ce que** la courbe fonctionnelle (fLF) entre la couleur de la lumière (LF) et la valeur de réglage (S) de l'une des paires de courbes fonctionnelles est identique à la courbe fonctionnelle (fLF) entre la couleur de la lumière (LF) et la valeur de réglage (S) de l'autre paire de courbes fonctionnelles.

7. Procédé selon la revendication 6, **caractérisé en ce qu'**une paire de courbes fonctionnelles additionnelle est formée entre la courbe fonctionnelle prédéterminée (fLF) entre la couleur de la lumière (LF) et la valeur de réglage (S) ainsi que la courbe fonctionnelle prédéterminée (fLS) entre le flux lumineux (LS) et la valeur de réglage (S) d'une autre source lumineuse, la courbe fonctionnelle (fLF) entre la couleur de la lumière (LF) et la valeur de réglage (S) de la paire de courbes fonctionnelles additionnelle étant différente des autres paires de courbes fonctionnelles.

8. Procédé selon l'une des revendications précédentes 1 à 6, **caractérisé en ce que** la courbe fonctionnelle (fLF) entre la couleur de la lumière (LF) et la valeur de réglage (S) de l'une des paires de courbes fonctionnelles est différente de la courbe fonctionnelle (fLF) entre la couleur de la lumière (LF) et la valeur de réglage (S) de l'autre paire de courbes fonctionnelles.

9. Procédé selon l'une des revendications précédentes, **caractérisé en ce que** le flux lumineux de l'une des paires de courbes de fonctionnement ou de l'une des sources lumineuses varie plus fortement en cas d'augmentation de la valeur de réglage que celui d'une autre des paires de courbes de fonctionnement ou d'une autre des sources lumineuses en cas de même augmentation de la valeur de réglage.

10. Procédé selon l'une des revendications précédentes, **caractérisé en ce que**, par rapport à un plan horizontal (H) s'étendant à l'horizontale, au moins une des sources lumineuses (4) est dirigée dans une zone située au-dessus du plan horizontal (H) et **en ce qu'**au moins une autre des sources lumineuses (4) est dirigée dans une zone située en dessous du plan horizontal (H), la couleur de la lumière (LF) et/ou le flux lumineux (LS) de la source lumineuse dirigée vers la zone située au-dessus du plan horizontal (H) variant, notamment augmentant, dans une mesure différente de la couleur de la lumière (LF) et/ou du flux lumineux (LS) de la source lumineuse (4) dirigée vers la zone située au-dessous du plan horizontal (H), pour une valeur de réglage croissante identique.

11. Procédé selon l'une quelconque des revendications précédentes, **caractérisé en ce que** la plage de la valeur de réglage est définie comme étant une plage comprise entre 0% et 100%, dans lequel, pour une valeur de réglage de 0%, le flux lumineux tend vers 0, et dans lequel, pour une valeur de réglage de 100%, le flux lumineux est plus grand que le flux lumineux pour une valeur de réglage de 0%.

12. Procédé selon l'une des revendications précédentes, **caractérisé**
**en ce que** la courbe fonctionnelle (fLF) entre la couleur de la lumière (LF) et la valeur de réglage (S) peut être déplacée par l'utilisateur par rapport à la couleur de la lumière dans un espace chromatique, la forme de la courbe fonctionnelle (fLF) restant inchangée ; ou la forme de la courbe fonctionnelle (fLF) se modifiant ;
ou
**en ce que** la courbe fonctionnelle (fLS) entre le flux lumineux (LS) et la valeur de réglage (S) peut être déplacée par l'utilisateur par rapport au flux lumineux, la forme de la courbe fonctionnelle (fLS) restant inchangée ; ou la forme de la courbe fonctionnelle (fLS) se modifiant.

13. Système d'éclairage de local sanitaire, qui peut être exploité selon le procédé selon l'une des revendications précédentes, comprenant
une commande (2),
au moins un organe de réglage (3) agissant sur la commande (2) et réglable par un utilisateur, une valeur de réglage (S) de la commande (2) pouvant être prédéfinie par l'intermédiaire de l'organe de réglage (3) selon un réglage de l'utilisateur, et
plusieurs sources lumineuses (4) qui peuvent être commandées par la commande (2) sur la base de la valeur de réglage (S) entrée par l'utilisateur via l'organe de réglage (3),
une courbe fonctionnelle prédéterminée (fLF) entre la couleur de la lumière (LF) et la valeur de réglage (S) ainsi qu'une courbe fonctionnelle prédéterminée (fLS) entre le flux lumineux (LS) et la valeur de réglage (S) étant mémorisées dans la commande (2) pour chaque source lumineuse, la courbe fonctionnelle prédéterminée (fLF) entre la couleur de la lumière (LF) et la valeur de réglage (S) ainsi que la courbe fonctionnelle prédéterminée (fLS) entre le flux lumineux (LS) et la valeur de réglage (S) formant respectivement une paire de courbes fonctionnelles pour une source lumineuse (4),
les courbes fonctionnelles (fLF, fLS) étant définies de telle sorte que, lorsque la valeur de réglage (S) augmente, la couleur de la lumière (LF) et le flux lumineux (LS) peuvent être modifiés,
la commande étant conçue pour, lors de l'actionnement de l'organe de réglage (3), commander ladite au moins une source lumineuse (4) sur la base des courbes fonctionnelles (fLF, fLS) prédéterminées, de telle sorte que la couleur de la lumière (LF) et le flux lumineux (LS) puissent être modifiés lorsque la valeur de réglage (S) augmente,
et
deux paires de de courbes fonctionnelles différentes étant prévues pour au moins deux sources lumineuses (4), de telle sorte qu'une paire de courbes fonctionnelles adaptée est associée à chaque source lumineuse (4), chacune des différentes paires de courbes fonctionnelles pouvant être commandée avec la même valeur de réglage (S).

14. Agencement pouvant être exploité selon le procédé selon l'une des revendications précédentes, comprenant un système d'éclairage de local sanitaire selon la revendication 13 et au moins un article sanitaire,
au moins une des sources lumineuses (4) étant disposée sur l'au moins un article sanitaire.

15. Système d'éclairage de local sanitaire ou agencement respectivement selon la revendication 13 ou 14, **caractérisé en ce qu'**au moins l'une des sources lumineuses (4) et la commande (2) sont disposées sur une armoire de toilette (6) et **en ce que** d'autres sources lumineuses (4) optionnelles, qui peuvent être commandées par la commande, sont intégrées dans le système d'éclairage.

16. Système d'éclairage de local sanitaire ou agencement respectivement selon l'une des revendications 13 à 15, **caractérisé en ce que** l'organe de réglage est un régulateur et/ou une application sur un ordinateur, notamment un smartphone ou une tablette, et/ou une commande domotique.

17. Système d'éclairage de local sanitaire ou agencement selon l'une des revendications 13 à 16, **caractérisé en ce que** le système d'éclairage est prévu pour un espace intérieur, la source lumineuse pour un ou plusieurs type(s) d'éclairage étant choisie dans le groupe de :
- plafonnier ;
- lumière de miroir ;
- éclairage du plan de travail ;
- lumière au sol ; et/ou
- éclairage de niche.

18. Utilisation d'un système d'éclairage de local sanitaire ou d'un agencement selon l'une quelconque des revendications précédentes 13 à 17, **caractérisée en ce que** le système d'éclairage de local sanitaire est utilisé pour un local sanitaire, en particulier une salle de bains.
